# EUROPÄISCHE PATENTANMELDUNG

(11) **EP 0 716 494 A1**
(43) Veröffentlichungstag der Anmeldung: **12.06.1996**
(21) Anmeldenummer: 95890214.0
(22) Anmeldetag: 05.12.1995
(51) Int. Cl.: H02H 9/04, H02H 3/05

(54) **Überspannungsschutzeinrichtung**

(30) Priorität: 05.12.1994 AT 2254/94
(71) Anmelder: FELTEN & GUILLEAUME AUSTRIA AG, A-3943 Schrems-Eugenia 1 (AT)
(72) Erfinder: Suchentrunk, Karl, A-2435 Wienerherberg (Niederösterreich) (AT)
(74) Vertreter: Hehenberger, Reinhard, Dipl.-Ing.

(57) **Zusammenfassung**

Die Überspannungsschutzeinrichtung weist eine zwei Stromleiter (I, II) verbindende Reihenschaltung aus einem Überspannungsbegrenzer (V1) und einem mit diesem thermisch gekoppelten Schalter (S1) auf. Parallel zum ersten Überspannungsbegrenzer (V1) ist ein zweiter Überspannungsbegrenzer (V2) angeordnet und der Schalter (S1) schaltet vom ersten (V1) zum zweiten (V2) Überspannungsbegrenzer, wenn die Temperatur im ersten Überspannungsbegrenzer (V1) einen vorgegebenen Wert überschreitet.

Nach dem Umschalten ist wieder ein vollwertiger Überspannungsschutz des Verbrauchers gegeben, wobei auch der zweite Überspannungsbegrenzer (V2) thermisch mit einem zweiten Schalter (S2) gekoppelt sein kann, der entweder den Verbraucher oder den Überspannungsbegrenzer (V2) und folglich die gesamte Überspannungsschutzeinrichtung vom Netz trennt.

## Beschreibung

Die Erfindung betrifft eine Überspannungsschutzeinrichtung mit einer zwei Stromleiter verbindenden Reihenschaltung aus einem Überspannungsbegrenzer und einem mit diesem thermisch gekoppelten Schalter und mit einem zweiten Überspannungsbegrenzer.

Derzeit bestehende Überspannungsschutzeinrichtungen für Netzspannung (230/400 V) schalten bei Überlastung des Überspannungsschutzes entweder die Überspannungsschutzeinrichtung vom Netz oder sie unterbrechen die Netzversorgung. Der Errichter der Anlage muß daher entscheiden, ob im Überlastfall der Verbraucher abgeschaltet oder ob die Anlage ohne Überspannungsschutz weiter betrieben wird, welche Entscheidung z.B. in Spitälern, chemischen Betrieben u. dgl. weitreichende Folgen nach sich zieht.

Eine gattungsgemäße Überspannungsschutzeinrichtung ist beispielsweise aus dem DE-GM 93 16 664.8 bekannt. Bei der bekannten Überspannungsschutzeinrichtung wird ein an einen ersten Stromleiter angeschlossener Varistor über eine erste mit diesem thermisch gekoppelte Abtrennvorrichtung mit dem zweiten Stromleiter verbunden. Parallel zur ersten Abtrennvorrichtung ist eine zweite mit dem Varistor ebenfalls thermisch gekoppelte Abtrennvorrichtung mit einer in Serie geschalteten Funkenstrecke angeordnet, wobei die zweite Abtrennvorrichtung erst bei einer höheren Temperatur als die erste anspricht.

Diese Schaltung weist jedoch folgenden Nachteil auf: Spricht die erste Abtrennvorrichtung nach Überlastung des Varistors an und öffnet, wird die Funkenstrecke in Reihe zum geschädigten Varistor geschaltet, wodurch kein Strom mehr über den Varistor fließen kann. Bei nachfolgenden Überspannungen wird die Funkenstrecke gezündet und die Überspannung ordnungsgemäß abgeleitet. Wenn der Varistor geschädigt ist, ist jedoch sehr zweifelhaft, ob der nun auftretende Netzfolgestrom über die Funkenstrecke gelöscht werden kann. In weiterer Folge werden die Funkstrecke und der Varistor durch den Netzfolgestrom überbelastet und die zweite Trennvorrichtung spricht möglicherweise an, obwohl dafür gar keine Veranlassung besteht.

Weiters kann bei der bekannten Schaltung folgender Fehler auftreten: Nachdem die erste Trennvorrichtung nach einer Überlastung des Varistors angesprochen hat, könnten nachfolgende Überspannungen zu einer Überlastung der nun zugeschalteten Funkenstrecke führen. Um diese Überlastung zu vermeiden, wertet die zweite Trennvorrichtung die Temperatur des Varistors aus, um beim Überschreiten einer vorgegebenen Temperatur ebenfalls anzusprechen. Wenn jedoch der Varistor durch eine vorhergehende Überlastung so weit zerstört wurde, daß er nur mehr einen ganz geringen Widerstand besitzt, dann wird sich der Varistor bei Überlastung nicht mehr ausreichend erwärmen, weshalb die zweite Trennvorrichtung nicht mehr auslösen und somit die Funkenstrecke nicht vor Überlastung schützen kann.

Aufgabe der Erfindung ist es daher, eine gattungsgemäße Überspannungsschutzeinrichtung so weiterzubilden, daß auch nach einem erstmaligen Wirksamwerden der Überspannungsschutzeinrichtung noch ein weiterer zuverlässiger Überspannungsschutz gegeben ist.

Gelöst wird diese Aufgabe bei einer gattungsgemäßen Überspannungsschutzeinrichtung dadurch, daß die beiden Überspannungsbegrenzer parallel zueinander angeordnet und an einen gemeinsamen Stromleiter angeschlossen sind, und daß der mit dem anderen Stromleiter verbundene Schalter von einem zum anderen Überspannungsbegrenzer umschaltbar ist.

Gemäß der vorliegenden Erfindung wird ein einmal überlasteter Überspannungsbegrenzer weg- und ein neuer zugeschaltet, wodurch Redundanz erreicht wird und auch weiterhin ein zuverlässiger Überspannungsschutz gegeben ist.

Das Umschalten von überlasteten Überspannungsbegrenzern auf einen neuen kann zur Anzeige gebracht werden, wodurch der Betreiber der Anlage die Möglichkeit erhält, den Überspannungsschutz auszutauschen, bevor ein Zustand eintritt, der auch das zweite Überspannungsschutzelement zum Ansprechen bringt und dadurch die Anlage schutzlos oder abgeschaltet wird.

Weitere Merkmale und Vorteile der Erfindung ergeben sich aus den Unteransprüchen und der nachfolgenden Beschreibung von Ausführungsbeispielen der Erfindung. Es zeigt:
Fig. 1 eine Ausführungsform der erfindungsgemäßen Überspannungsschutzeinrichtung,
Fig. 2 eine Fig. 1 entsprechende Überspannungsschutzeinrichtung mit Signaleinrichtungen, die den Betreiber der Anlage, vorzugsweise optisch, den Betriebszustand der Überspannungsschutzeinrichtung anzeigen und
Fig. 3 eine zweite Ausführungsform der Erfindung mit Signaleinrichtungen.

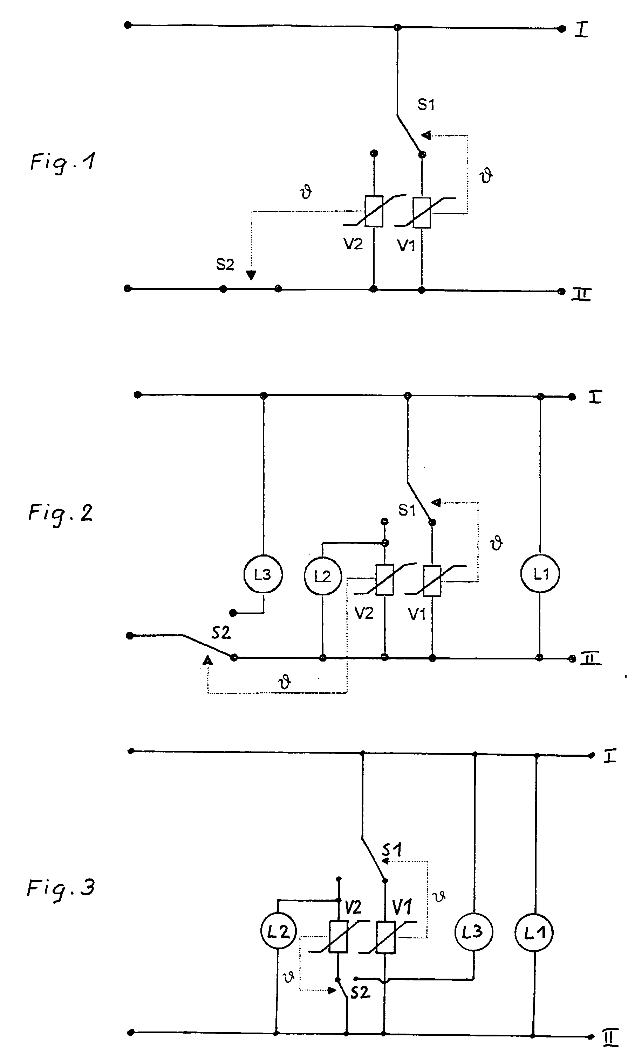

In Fig. 1 sind zwei Stromleiter I und II dargestellt, zwischen denen ein Schalter S1 und ein Überspannungsbegrenzer V1, z.B. ein Varistor oder eine Funkenstrecke, in Reihe geschaltet sind. Der Varistor V1 ist thermisch mit dem temperaturgesteuerten Schalter S1 gekoppelt, d.h. der Schalter S1 spricht an, wenn der Varistor V1 eine vorgegebene Temperatur überschreitet.

Parallel zum ersten Überspannungsbegrenzer V1 ist ein zweiter Überspannungsbegrenzer V2 angeordnet, der ebenso wie der Überspannungsbegrenzer V1 mit dem Stromleiter II verbunden ist. Spricht der Schalter S1 auf Grund einer thermischen Überlastung des Überspannungsbegrenzers V1 an, schaltet er zum zweiten Überspannungsbegrenzer V2 um und verbindet diesen mit dem zweiten Stromleiter I, so daß auch weiterhin ein vollwertiger Überspannungsschutz für den Verbraucher gegeben ist.

Der zweite Überspannungsbegrenzer V2, ebenfalls z.B. ein Varistor oder eine Funkenstrecke, ist thermisch mit einem Schalter oder einer Thermosicherung S2 verbunden und löst diese aus, wenn auch im zweiten Überspannungsbegrenzer V2 eine vorgegebene Temperatur überschritten wird. Der zweite Schalter S2 kann entweder in der Stromleitung II angeordnet sein und diese unterbrechen (Fig. 1 und 2) oder in der Verbindungsleitung zwischen dem zweiten Überspannungsbegrenzer V2 und dem Stromleiter II (Fig. 3). Im ersten Fall wird der Verbraucher vom Netz getrennt, im zweiten wird der Überspannungsschutz außer Betrieb gesetzt.

In Fig. 2 ist eine Fig. 1 entsprechende Schaltung dargestellt, welche eine Signaleinrichtung nach dem sogenannten "Ampelschema" aufweist. Die Signaleinrichtungen L1, L2 und L3 sind in diesem Fall optische Signaleinrichtungen, wobei die erste Signaleinrichtung L1 ("grün") anzeigt, ob die Netzspannung für den Verbraucher vorhanden ist, und L2 ("orange") anzeigt, ob der Schalter S1 angesprochen hat, in welchem Fall der zweite Überspannungsbegrenzer V2 und die Signaleinrichtung L2 an Spannung liegen. Für den Anlagenbetreiber stellt dies eine Warnstufe dar, die ihm anzeigt, daß wenigstens der Überspannungsbegrenzer V1 durch einen neuen zu ersetzen ist. Die Signaleinrichtung L3 ("rot") leuchtet auf, wenn auch der zweite Schalter durch eine Überlastung des zweiten Überspannungsgbegrenzers V2 angesprochen hat und der Verbraucher nicht mehr an Spannung liegt.

Bei dem in Fig. 3 dargestellten Ausführungsbeispiel ist der Schalter S2 in die Verbindungsleitung zwischen dem zweiten Überspannungsbegrenzer V2 und dem Stromleiter II geschaltet, wodurch der Verbraucher nach dem Ansprechen des Schalters S2 zwar noch an Spannung liegt, die Überspannungsschutzeinrichtung jedoch außer Funktion ist, was dem Anlagenbetreiber durch das Aufleuchten der nun an Spannung liegenden Signaleinrichtung L3 angezeigt wird.

Zusammenfassend kann die Erfindung beispielsweise wie folgt dargestellt werden:

Die Überspannungsschutzeinrichtung weist eine zwei Stromleiter I, II verbindende Reihenschaltung aus einem Überspannungsbegrenzer V1 und einem mit diesem thermisch gekoppelten Schalter S1 auf. Parallel zum ersten Überspannungsbegrenzer V1 ist ein zweiter Überspannungsbegrenzer V2 angeordnet und der Schalter S1 schaltet vom ersten V1 zum zweiten V2 Überspannungsbegrenzer, wenn die Temperatur im ersten Überspannungsbegrenzer V1 einen vorgegebenen Wert überschreitet.

Nach dem Umschalten ist wieder ein vollwertiger Überspannungsschutz des Verbrauchers gegeben, wobei auch der zweite Überspannungsbegrenzer V2 thermisch mit einem zweiten Schalter S2 gekoppelt sein kann, der entweder den Verbraucher oder den Überspannungsbegrenzer V2 und folglich die gesamte Überspannungsschutzeinrichtung vom Netz trennt.

## Patentansprüche

1. Überspannungsschutzeinrichtung mit einer zwei Stromleiter verbindenden Reihenschaltung aus einem Überspannungsbegrenzer und einem mit diesem thermisch gekoppelten Schalter und mit einem zweiten Überspannungsbegrenzer, dadurch gekennzeichnet, daß die beiden Überspannungsbegrenzer (V1, V2) parallel zueinander angeordnet und an einen gemeinsamen Stromleiter (II) angeschlossen sind, und daß der mit dem anderen Stromleiter (I) verbundene Schalter (51) von einem (V1) zum anderen (V2) Überspannungsbegrenzer umschaltbar ist.

2. Überspannungsschutzeinrichtung nach Anspruch 1, dadurch gekennzeichnet, daß die Überspannungsbegrenzer (V1, V2) Varistoren, Funkenstrecken od.dgl. sind.

3. Überspannungsschutzeinrichtung nach Anspruch 1 oder 2, dadurch gekennzeichnet, daß der zweite Überspannungsbegrenzer (V2) thermisch mit einer weiteren Trenneinrichtung (S2) verbunden ist, die in der Leitung zwischen dem zweiten Überspannungsbegrenzer (V2) und dem mit diesem verbundenen Stromleiter (II) angeordnet ist.

4. Überspannungsschutzeinrichtung nach Anspruch 3, dadurch gekennzeichnet, daß die Trenneinrichtung (S2) in der Leitung zwischen dem zweiten Überspannungsbegrenzer (V2) und dem mit diesem verbundenen Stromleiter (II) verbunden ist.

5. Überspannungsschutzeinrichtung nach Anspruch 3, dadurch gekennzeichnet, daß die Trenneinrichtung (S2) in dem Stromleiter (II) zwischen der Überspannungsschutzeinrichtung und der Anspeisung angeordnet ist, mit dem die Überspannungsbegrenzer (V1, V2) verbunden sind.

6. Überspannungsschutzeinrichtung nach einem der Ansprüche 1 bis 5, dadurch gekennzeichnet, daß zwischen die beiden Stromleiter (I, II) eine Signaleinrichtung (L1) geschaltet ist.

7. Überspannungsschutzeinrichtung nach einem der Ansprüche 1 bis 6, dadurch gekennzeichnet, daß parallel zum zweiten Überspannungsbegrenzer (V2) eine Signaleinrichtung (L2) geschaltet ist.

8. Überspannungsschutzeinrichtung nach einem der Ansprüche 1 bis 7, dadurch gekennzeichnet, daß die Trenneinrichtung (S2) ein Schalter ist, der in seiner geöffneten Stellung die beiden Stromleiter (I, II) über eine Signaleinrichtung (L3) verbindet.

9. Überspannungsschutzeinrichtung nach einem der Ansprüche 1 bis 8, dadurch gekennzeichnet, daß die Signaleinrichtungen (L1, L2, L3) optische Signaleinrichtungen sind.
